# FASCICULE DE BREVET EUROPEEN

(11) **EP 4 117 895 B1**
(45) Date de publication et mention de la délivrance du brevet: **13.11.2024**
(21) Numéro de dépôt: 21716800.4
(22) Date de dépôt: 11.03.2021
(51) Int. Cl.: B29C 70/48, B64C 11/26

(54) **AUBE COMPRENANT UNE STRUCTURE EN MATÉRIAU COMPOSITE ET PROCÉDÉ DE FABRICATION ASSOCIÉ**
ROTORBLATT MIT VERBUNDSTOFFSTRUKTUR UND VERFAHREN ZU SEINER HERSTELLUNG
BLADE COMPRISING A COMPOSITE MATERIAL STRUCTURE AND METHOD OF MAKING THE SAME

(30) Priorité: 11.03.2020 FR 2002425
(43) Date de publication de la demande: 18.01.2023
(73) Titulaire: SAFRAN AIRCRAFT ENGINES, 75015 Paris (FR)
(72) Inventeur: SOURYAVONGSA, Eddy, Keomorakott, 77550 MOISSY-CRAMAYEL (FR); BINDER, Anthony, 77550 MOISSY-CRAMAYEL (FR); COURTIER, Vivien Mickaël, 77550 MOISSY-CRAMAYEL (FR)
(74) Mandataire: Regimbeau
(86) Numéro de dépôt international: PCT/FR2021/050413
(87) Numéro de publication internationale: WO 2021/181045

(56) Documents cités:
- CA-A- 930 670
- FR-A1- 3 080 322
- US-A- 3 869 221
- US-A- 4 968 217
- US-A- 6 071 076

## Description

### DOMAINE DE L'INVENTION

L'invention concerne une aube comprenant une structure en matériau composite.

L'invention concerne plus particulièrement, mais non exclusivement, une aube destinée à être utilisée dans un rotor de soufflante non-carénée de moteur d'aéronef (tels qu'un moteur de type « Open Rotor » (c'est-à-dire dont la soufflante n'est pas carénée présentant deux hélices tournantes ou un moteur de type USF pour « Unducted Single Fan » présentant un aubage mobile et un aubage fixe ou un turbopropulseur présentant une architecture avec une seule hélice) ou dans un rotor d'éolienne.

### ETAT DE LA TECHNIQUE

L'intérêt des moteurs à soufflante non-carénée est que le diamètre de la soufflante n'est pas limité par la présence d'un carénage, de sorte qu'il est possible de concevoir un moteur présentant un fort taux de dilution, et par conséquent une consommation réduite de carburant.

Ainsi, dans ce type de moteur, les aubes de la soufflante peuvent présenter une grande envergure.

De plus, ces moteurs comprennent généralement un mécanisme permettant de modifier l'angle de calage des aubes afin d'adapter la poussée générée par la soufflante en fonction des différentes phases de vol.

Cependant, la conception de telles aubes nécessite de prendre en compte des contraintes antagonistes.

D'un côté, le dimensionnement de ces aubes doit permettre des performances aérodynamiques optimales (maximiser le rendement et fournir la poussée tout en minimisant les pertes). L'amélioration des performances aérodynamiques de la soufflante tend vers une augmentation du taux de dilution (BPR), ce qui se traduit par une augmentation du diamètre externe, et donc de l'envergure de ces aubes.

D'un autre côté, il est également nécessaire de garantir une résistance aux contraintes mécaniques pouvant s'exercer sur ces aubes tout en limitant leur signature acoustique.

Par ailleurs, sur les architectures à soufflante non-carénée, le démarrage du moteur est généralement effectué avec un calage très ouvert. En effet, un calage très ouvert permet de consommer la puissance par le couple, ce qui assure la sécurité machine en garantissant des régimes de soufflante faibles.

Or, avec un calage très ouvert, les aubes subissent un écoulement aérodynamique turbulent, complètement décollé, qui génère une excitation vibratoire large bande. En particulier sur des aubes à large corde et de grande envergure, l'effort de flexion est intense, bien que le régime moteur ne soit pas maximal.

En fonctionnement normal, durant les phases au sol et en vol, le calage est modifié (l'angle de calage est plus fermé). L'écoulement aérodynamique est donc parfaitement sain (recollé au profil aérodynamique). Les sollicitations large bande disparaissent, le régime de rotation étant plus élevé, et l'effort de flexion est maitrisé.

Actuellement, ces aubes sont généralement réalisées en matériau métallique. Si les aubes en matériau métallique ont une bonne résistance mécanique, elles présentent toutefois l'inconvénient d'avoir une masse relativement importante.

Afin de réduire cette masse, il est souhaitable de pouvoir fabriquer ces aubes en matériau composite. Toutefois, les efforts aérodynamiques intenses auxquelles ces aubes seraient soumises risqueraient d'endommager l'aube et/ou le moyeu dans la zone d'interface entre ces aubes et le moyeu du rotor de la soufflante. Ce problème se pose plus particulièrement lorsque les aubes sont reliées au moyeu par le biais d'attaches brochées en raison des niveaux vibratoires sur les ordres moteur AN, 2N et 3N.

Le document FR3080322 décrit une aube en matériau composite comprenant une pièce de blocage disposée dans la cavité d'une attache de l'aube afin de maintenir le pied d'aube dans l'attache.

Le document CA930670 décrit une aube comprenant une attache de pied d'aube.

### EXPOSE DE L'INVENTION

Un but de l'invention est de proposer une aube incluant un matériau composite, adaptée pour être utilisée avec un mécanisme de calage variable et dans un environnement du type « Open Rotor », tout en étant capable de résister à des efforts aérodynamiques intenses, sous la contrainte d'un encombrement limité et d'une masse minimale.

Il est à cet effet proposé, selon un premier aspect de l'invention une aube comprenant :
- une structure en matériau composite comprenant un renfort fibreux obtenu par tissage tridimensionnel et une matrice dans laquelle est noyé le renfort fibreux, la structure en matériau composite comprenant une partie de pale à profil aérodynamique et une partie de pied d'aube ;
- une pièce d'attache de pied d'aube comprenant une paroi délimitant une cavité, une première ouverture formée dans la paroi et une deuxième ouverture située sous la partie de pied d'aube, d'un côté opposé de la pièce d'attache par rapport à la première ouverture, la structure en matériau composite s'étendant à travers l'ouverture de telle sorte que la partie de pale est située à l'extérieur de la pièce d'attache et la partie de pied d'aube est située à l'intérieur de la cavité, la pièce d'attache comprenant en outre un épaulement, s'étendant dans la cavité depuis la paroi ;
- deux pièces de blocage, chaque pièce de blocage présentant une face supérieure configurée pour venir en butée axiale contre l'épaulement et une face inférieure inclinée par rapport à la face supérieure et configurée pour venir en appui contre la partie de pied d'aube ; et
- un couvercle, fixé sur la pièce d'attache au niveau de la deuxième ouverture de sorte que la partie de pied d'aube se trouve comprimée entre le couvercle et les pièces de blocage ; au moins un renfoncement étant formé dans l'épaulement, chaque pièce de blocage étant logée dans l'au moins un renfoncement.

Certaines caractéristiques préférées mais non limitatives de l'aube selon le premier aspect sont les suivants, prises individuellement ou en combinaison :
- les pièces de blocage sont en appui contre le renfoncement; au moins un renfoncement est formé dans l'épaulement, chaque pièce de blocage étant logée dans l'au moins un renfoncement ;
- l'épaulement présente une face radiale s'étendant en face de la partie de pied d'aube et chaque pièce de blocage comprend une languette s'étendant depuis sa face supérieure, ladite languette étant configurée pour venir en butée radiale contre la face radiale de l'épaulement ; et/ou
- le renfort fibreux comprend une portion de renfort fibreux de pale et une portion de renfort fibreux de pied d'aube, et dans laquelle la portion de renfort fibreux de pied d'aube est chacune tissée de manière continue avec la portion de renfort fibreux de pale.

Selon un deuxième aspect, l'invention propose un procédé de fabrication d'une aube selon le premier aspect à partir d'un renfort fibreux obtenu par tissage tridimensionnel, le renfort fibreux comprenant une portion de renfort fibreux de pale et une portion de renfort fibreux de pied d'aube, le procédé comprenant des étapes de :
- réalisation de la pièce d'attache de pied d'aube de sorte à former la cavité et l'épaulement ;
- placement du renfort fibreux dans la pièce d'attache à travers l'ouverture de telle sorte que la portion de renfort fibreux de pale est située à l'extérieur de la pièce d'attache, au-delà de la première ouverture, et qu'une partie de la portion de renfort fibreux de pied d'aube est située à l'extérieur de la pièce d'attache, au-delà de la deuxième ouverture ;
- placement des pièces de blocage dans la cavité de sorte que leur face supérieure soit en butée axiale contre l'épaulement ;
- placement du renfort fibreux dans la pièce d'attache de sorte que la portion de renfort fibreux de pied d'aube est située à l'intérieur de la pièce d'attache et soit en appui contre la face inférieure inclinée des pièces de blocage ; et
- fixation du couvercle sur la pièce d'attache au niveau de la deuxième ouverture en comprimant la partie de pied d'aube entre le couvercle et les pièces de blocage.

Certaines caractéristiques préférées mais non limitatives du procédé de fabrication d'une aube selon le deuxième aspect sont les suivantes, prises individuellement ou en combinaison :
- le procédé comprend en outre une étape de placement du renfort fibreux dans un moule et d'injection de matière plastique dans le moule de manière à former la structure en matériau composite comprenant le renfort fibreux et une matrice dans laquelle est noyé le renfort fibreux préalablement à l'étape S3 de placement ;
- le procédé comprend en outre une étape de placement de l'ensemble formé du renfort fibreux, de la pièce d'attache et des pièces de blocage dans un moule et une étape d'injection de matière plastique dans le moule de manière à former la structure en matériau composite comprenant le renfort fibreux et une matrice dans laquelle est noyé le renfort fibreux préalablement à l'étape S6 de fixation du couvercle ; et/ou
- le procédé comprend en outre une étape de placement de pièces provisoires de protection contre la portion de renfort fibreux de pied et/ou au niveau de la deuxième ouverture préalablement à l'étape de placement de l'ensemble dans un moule et une étape de retrait desdites pièces provisoires de protection préalablement à l'étape de fixation du couvercle.

Selon un troisième aspect, l'invention propose un moteur à turbine à gaz comprenant une soufflante, la soufflante comprenant un moyeu et des aubes s'étendant radialement à partir du moyeu, les aubes étant conformes au premier aspect, chaque aube étant montée rotative par rapport au moyeu autour d'un axe de calage respectif, le moteur comprenant en outre un mécanisme d'actionnement propre à être commandé pour faire tourner les aubes autour de leurs axes de calage de manière à modifier l'angle de calage des aubes.

Selon un quatrième aspect, l'invention propose un aéronef comprenant un moteur à turbine à gaz selon le troisième aspect.

Selon un exemple, l'invention propose une aube comprenant :
- une structure en matériau composite comprenant un renfort fibreux obtenu par tissage tridimensionnel et une matrice dans laquelle est noyé le renfort fibreux, la structure en matériau composite comprenant une partie de pale à profil aérodynamique et une partie de pied d'aube ;
- une pièce d'attache de pied d'aube comprenant une paroi délimitant une cavité, une première ouverture formée dans la paroi et une deuxième ouverture située sous la partie de pied d'aube, d'un côté opposé de la pièce d'attache par rapport à la première ouverture, la structure en matériau composite s'étendant à travers l'ouverture de telle sorte que la partie de pale est située à l'extérieur de la pièce d'attache et la partie de pied d'aube est située à l'intérieur de la cavité, la pièce d'attache comprenant en outre un épaulement, s'étendant dans la cavité depuis la paroi ;
- deux pièces de blocage, chaque pièce de blocage présentant une face supérieure configurée pour venir en butée axiale contre l'épaulement et une face inférieure inclinée par rapport à la face supérieure et configurée pour venir en appui contre la partie de pied d'aube ; et
- un couvercle, fixé sur la pièce d'attache au niveau de la deuxième ouverture de sorte que la partie de pied d'aube se trouve comprimée entre le couvercle et les pièces de blocage ; l'épaulement présentant une face radiale s'étendant en face de la partie de pied d'aube et chaque pièce de blocage comprenant une languette s'étendant depuis sa face supérieure, ladite languette étant configurée pour venir en butée radiale contre la face radiale de l'épaulement.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 représente de manière schématique un exemple de moteur incluant une soufflante non-carénée,
La figure 2 représente de manière schématique une aube de soufflante et un mécanisme d'actionnement permettant de modifier l'angle de calage des aubes de la soufflante,

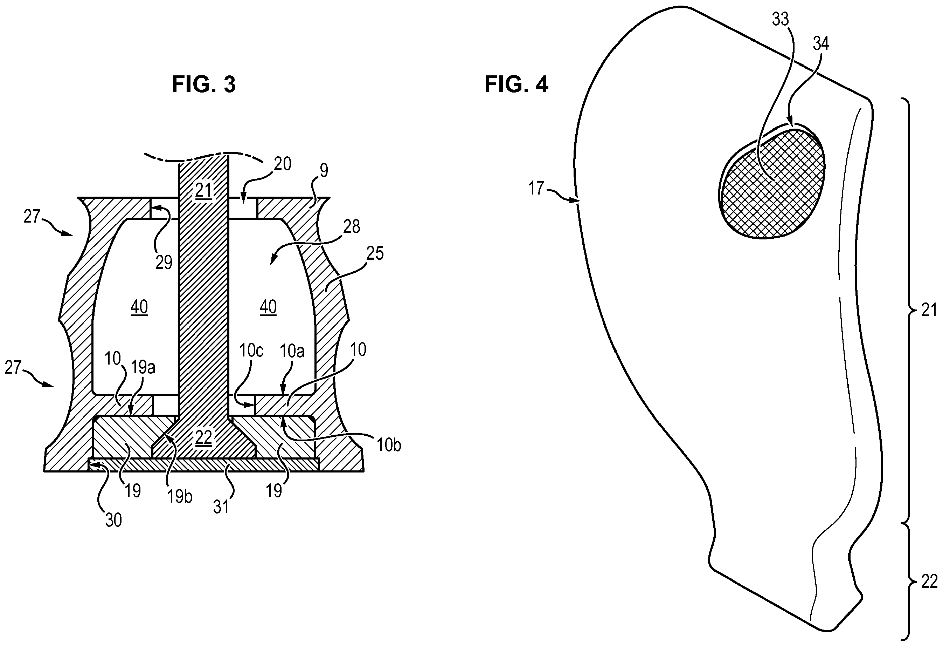

La figure 3 est une vue en coupe schématique une aube de soufflante conforme à un premier mode de réalisation de l'invention,
La figure 4 représente de manière schématique une structure en matériau composite faisant partie de l'aube,
Les figures 5 et 6 illustrent de manière schématique un exemple de réalisation du tissage tridimensionnel sur un métier à tisser d'un renfort fibreux pour une aube conforme à un mode de réalisation de l'invention.
La figure 7 illustre de manière schématique le montage d'une aube de soufflante conforme à un deuxième mode de réalisation.
La figure 8 illustre de manière schématique le montage d'une aube de soufflante conforme à un deuxième mode de réalisation.
Les figures 9 et 10 sont des organigrammes d'étapes d'un procédé selon une première et une deuxième forme de réalisation de l'invention.

Sur l'ensemble des figures, les éléments similaires portent des références identiques.

### DESCRIPTION DETAILLEE DE L'INVENTION

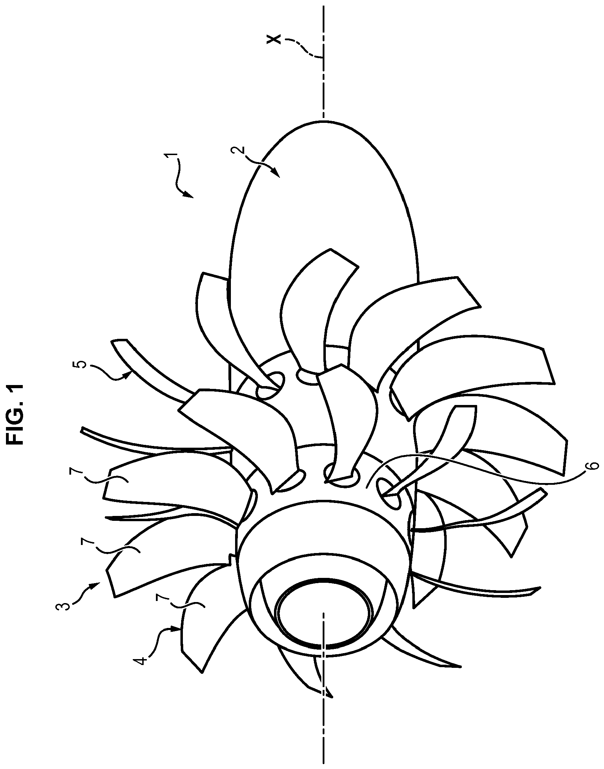

Sur la figure 1, le moteur 1 représenté est un moteur de type « Open Rotor », en configuration couramment qualifiée de « pusher » (i.e. la soufflante non-carénée est placée à l'arrière du générateur de puissance avec une entrée d'air située sur le côté, à droite sur la figure 1).

Le moteur comprend une nacelle 2 destinée à être fixée à un fuselage d'un aéronef, et une soufflante 3 non-carénée. La soufflante 3 comprend deux rotors de soufflante contrarotatifs 4 et 5. Autrement dit, lorsque le moteur 1 est en fonctionnement, les rotors 4 et 5 sont entraînés en rotation par rapport à la nacelle 2 autour d'un même axe de rotation X (qui coïncide avec un axe principal du moteur), en sens opposés.

Dans l'exemple illustré sur la figure 1, le moteur 1 est un moteur de type « Open Rotor » en configuration « pusher » à rotors de soufflante contrarotatifs. Cependant, l'invention n'est pas limitée à cette configuration. L'invention s'applique également à des moteurs de type « Open Rotor » en configuration « puller » (i.e. la soufflante est placée en amont du générateur de puissance avec une entrée d'air située avant, entre ou juste derrière les deux rotors de soufflante).

En outre, l'invention s'applique également à des moteurs présentant des architectures différentes, telles qu'une architecture comprenant un rotor de soufflante comprenant des aubes mobiles et un stator de soufflante comprenant des aubes fixes, ou bien un unique rotor de soufflante.

L'invention est applicable à des architectures de type turbopropulseur (comprenant un unique rotor de soufflante).

Sur la figure 1, chaque rotor de soufflante 4, 5 comprend un moyeu 6 monté rotatif par rapport à la nacelle 2 et une pluralité d'aubes 7 fixées au moyeu 6. Les aubes 7 s'étendent sensiblement radialement par rapport à l'axe de rotation X du moyeu.

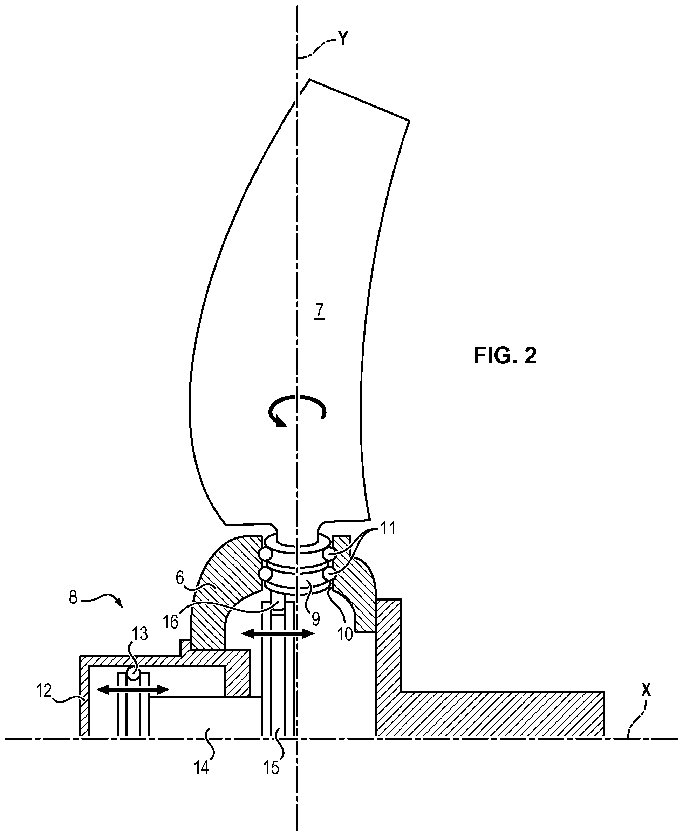

Comme illustré sur la figure 2, la soufflante 3 comprend en outre un mécanisme d'actionnement 8 permettant de modifier collectivement l'angle de calage des aubes des rotors, afin d'adapter les performances du moteur aux différentes phases de vol. A cet effet, chaque aube 7 comprend une pièce d'attache 9 (ou moyeu) disposée en pied d'aube. La pièce d'attache 9 est montée rotative par rapport au moyeu 6 autour d'un axe de calage Y. Plus précisément, la pièce d'attache 9 est montée rotative à l'intérieur d'un logement 10 ménagé dans le moyeu 6, par l'intermédiaires de billes 11 ou d'autres éléments roulants.

Le mécanisme d'actionnement 8 comprend un actionneur 12 comprenant un corps 13 fixé au moyeu 6 et une tige 14 propre à être entrainée en translation par rapport au corps 12. Le mécanisme d'actionnement 8 comprend en outre une glissière annulaire 15 montée solidaire de la tige 14 et un pion 16 monté solidaire de la pièce d'attache 9. Le pion 16 est propre à coulisser dans la glissière 15 et à tourner par rapport à la glissière 15, de manière à convertir un mouvement de translation de la tige 14 est un mouvement de rotation de la pièce d'attache 9, et par conséquent un mouvement de rotation de l'aube 7 par rapport au moyeu 6 autour de son axe de calage Y.

L'aube de soufflante 7 comprend une structure en matériau composite 17, une pièce d'attache 7 du pied de l'aube 7, deux pièces de blocage 19 et un couvercle 31.

La structure en matériau composite 17 comprenant un renfort fibreux 33 obtenu par tissage tridimensionnel et une matrice 34 dans laquelle est noyé le renfort fibreux 33.

Le renfort fibreux peut être formé à partir d'une préforme fibreuse en une seule pièce obtenue par tissage tridimensionnel ou multicouche avec épaisseur évolutive. Il peut notamment comprendre des fibres en carbone, en verre, aramide et/ou céramique. La matrice qui enrobe les fils du renfort fibreux 33 quant à elle est typiquement une matière plastique, typiquement un polymère, par exemple époxyde, bismaléimide ou polyimide, ou une matrice en carbone. L'aube 1 est alors formée par moulage au moyen d'un procédé d'injection sous vide de résine du type RTM (pour « Resin Transfer Moulding), ou encore VARRTM (pour Vacuum Resin Transfer Molding).

Le renfort fibreux 33 est tissé de telle sorte qu'il comprend des fils de chaine qui s'étendent continument à la fois à l'intérieur de la partie de pale à profil aérodynamique 21 et à l'intérieur de la partie de pied d'aube 22.

La structure en matériau composite 17 comprend une partie de pale 21 à profil aérodynamique et une partie de pied d'aube 22. La partie de pale 21 à profil aérodynamique est propre à être placée dans un flux d'air, lorsque le moteur est en fonctionnement, afin de générer une portance. La partie de pied d'aube 22 est destinée à permettre la fixation de la structure en matériau composite 17 à la pièce d'attache 9.

La partie de pied d'aube 22 est reliée de manière continue à la partie de pale 21. La partie de pied d'aube 22 présente une épaisseur qui augmente lorsqu'on parcourt la partie en s'éloignant de la partie de pale 21 à profil aérodynamique.

La pièce d'attache 9 est formée en métal, par exemple en acier martensitique. La pièce d'attache 9 comprend une paroi 25 présentant une surface externe 26 ayant une forme de révolution. La surface externe 26 présente deux gorges circulaires 27 propres à former des chemins de roulement pour des billes 11 ou d'autres éléments roulants.

La paroi 25 de la pièce d'attache 9 délimite une cavité 28 configurée pour loger la partie de pied d'aube 22 de la structure en matériau composite 17. La paroi 25 présente une première ouverture 29 en forme générale de rectangle à travers laquelle s'étend la structure en matériau composite 17 de telle sorte que la partie de pale 21 est située à l'extérieur de la pièce d'attache 9. La pièce d'attache 9 présente en outre une deuxième ouverture 30, plus large que la première ouverture 29 et située sous la partie de pied d'aube 22, d'un côté opposé de la pièce d'attache 9 par rapport à la première ouverture 28. Le cas échéant, cette deuxième ouverture 30 peut être circulaire.

La pièce d'attache 9 comprend en outre un épaulement 10 s'étendant dans la cavité 28 depuis la paroi 25. L'épaulement 10 peut notamment être obtenu par usinage de la face interne de la paroi 25. L'épaulement 10 s'étend le long de la périphérie interne de la paroi 25, soit de manière continue, soit de manière discontinue. Dans une forme de réalisation, l'épaulement 10 est discontinu et comprend deux sections séparées s'étendant en regard l'une de l'autre, par exemple en face de la partie de pied d'aube 22 qui s'étend dans le prolongement des parois d'intrados et d'extrados de l'aube 7.

L'épaulement 10 présente une face supérieure 10a faisant face à la première ouverture 29, une face inférieure 10b faisant face à la deuxième ouverture 30 et une face radiale 10c s'étendant en direction de la partie de pied d'aube 22.

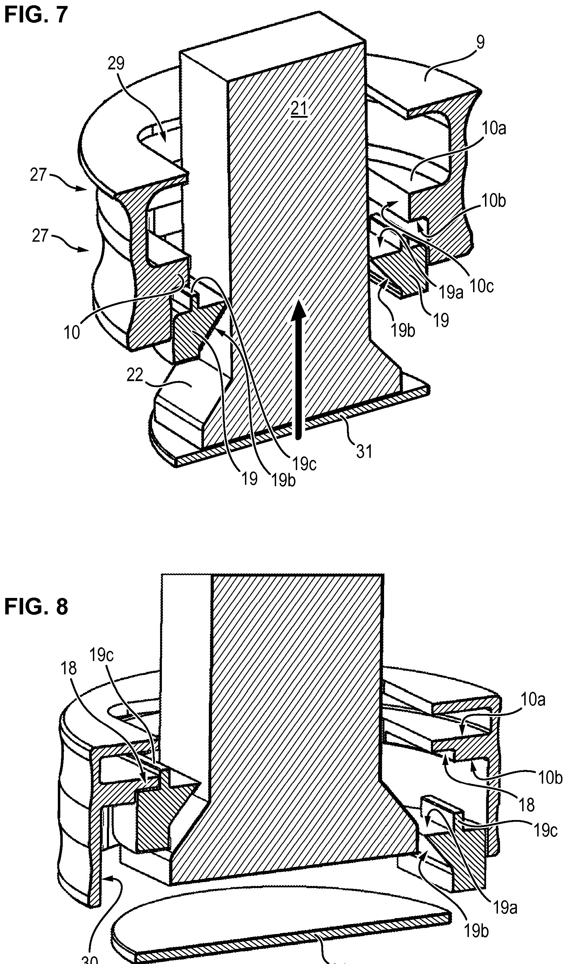

Les pièces de blocage 19 sont également disposées à l'intérieur de la cavité 28. Elles présentent chacune une face supérieure 19a configurée pour venir en butée axiale contre la face inférieure 10a de l'épaulement 10 (ou de la section d'épaulement 10 correspondante) et une face inférieure 19b au moins partiellement inclinée par rapport à la face supérieure 19a et configurée pour venir en appui contre la partie de pied d'aube 22. Pour cela, l'angle formé entre la face supérieure 19a et la face inférieure 19b inclinée est aigu. La face inférieure 19b peut être sensiblement plane et inclinée sur toute sa longueur, auquel cas les pièces de blocage 19 sont de forme sensiblement triangulaire. En variante, la face inférieure 19b peut présenter une portion interne radialement (c'est-à-dire proche de l'axe de calage Y) inclinée et une portion externe radialement (c'est-à-dire proche de la paroi 25) sensiblement parallèle à la face supérieure 19a (figures 7 et 8). Les faces supérieures 19a des pièces de blocage 19 permettent ainsi de fixer la position axiale des pièces de blocage 19 et donc de la partie de pied d'aube 22 par rapport à la pièce d'attache 9 tandis que les faces inférieures 18b inclinées jouent le rôle de portée pour la partie de pied d'aube 22 afin de reconstituer l'appui nécessaire à la partie de pied d'aube 22 pour la reprise des efforts centrifuges.

La surface de la portion inclinée des faces inférieures 19b des pièces de blocage 19 qui et en contact avec la partie de pied d'aube 22 peut, le cas échéance, être ajustée (notamment augmentée) afin de réduire la pression de matage.

Chaque pièce de blocage 19 comprend en outre une languette 19c s'étendant depuis sa face supérieure 19a et configurée pour venir en butée radiale contre la face radiale de l'épaulement 10. Les languettes 19c permettent de fixer la position angulaire des pièces de blocage 19 par rapport à l'axe de calage Y de l'aube 7 et de reprendre les efforts latéraux appliqués par la partie de pied d'aube 22 aux pièces de blocage 19. Un ajustement glissant entre les pièces de blocage 19 et la pièce d'attache 9 permet de faciliter le montage.

Les pièces de blocage 19 sont préférentiellement en métal, par exemple en acier martensitique, en aluminium ou en titane.

Dans une forme de réalisation illustrée en figure 8, l'épaulement comprend un renfoncement 18 formé dans sa face inférieure 10a et configuré pour recevoir une pièce de blocage 19 associée. Ce renfoncement 18 permet ainsi de réduire l'encombrement radial des pièces de blocage 19 (c'est-à-dire leur encombrement dans un plan normal à l'axe Y de calage) en rapprochant la butée radiale desdites pièces de blocage 19 de l'axe Y de calage. Comme nous le verrons par la suite, ce gain en encombrement radial des pièces de blocage 19 permet de moins abaisser la structure en matériau composite 17 par rapport à la pièce d'attache 9 au cours de l'étape S4 pour permettre leur placement dans la cavité 28 ou, le cas échéant, de faciliter ce placement.

L'aube de soufflante 7 comprend en outre un couvercle 31 propre à être fixé sur la pièce d'attache 9 au niveau de la deuxième ouverture 30 de sorte que la partie de pied d'aube 22 se trouve comprimée entre le couvercle 31 et les pièces de blocage 19. Ainsi, le couvercle 31 exerce sur la partie de pied d'aube 22 un effort de contrainte qui la presse contre les pièces de blocage 19 et plaque lesdites pièces de blocage 19 contre l'épaulement 10, ce qui évite les risques de rotulage du pied d'aube.

Lorsque la deuxième ouverture 30 est circulaire, le couvercle 31 peut notamment être fixé par vissage sur la pièce d'attache 9. Le cas échéant, la pièce d'attache 9 comprend en outre des moyens de freinage configurés pour éviter le desserrage du couvercle 31 en fonctionnement. Par exemple, les moyens de freinage peuvent comprendre une résine appliquée sur les filets de la deuxième ouverture 30 et/ou du couvercle 31 et/ou une rondelle autobloquante.

Le couvercle 31 est préférentiellement en métal, par exemple en acier martensitique, en aluminium ou en titane.

Optionnellement, l'aube 7 de soufflante comprend en outre des moyens configurés pour former une butée radiale pour l'aube 7 de soufflante dans la zone de son bord d'attaque et/ou de son bord de fuite. Ces moyens sont positionnés dans la pièce d'attache 9 entre les deux pièces de blocage 19.

Par exemple, les moyens formant butée peuvent être obtenus par usinage de la paroi 25 de la pièce d'attache 9 et s'étendre globalement entre les deux sections de l'épaulement 10. En variante, les moyens formant butée peuvent comprendre une ou deux cales placées dans la cavité 28, entre les deux sections de l'épaulement 10.

L'aube 7 comprend en outre un joint 20 placé dans la première ouverture 29, entre la structure en matériau composite 17 et le bord de la première ouverture 29 qui entoure la structure en matériau composite 17. Le joint 20 permet de combler le jeu subsistant entre la structure en matériau composite 17 et la pièce d'attache 9 au niveau de la première ouverture 29.

Le joint peut notamment comprendre un matériau élastomère, par exemple, l'un au moins des matériaux suivants : un copolymère éthylène-propylène (EP ou EPM) et terpolymère éthylène-propylène-diène (EPDM), un fluorosilicone (FVMQ) ou tout autre élastomère à base de silicone tel que du vinyl méthyl silicone (VMQ) à base de silicone.

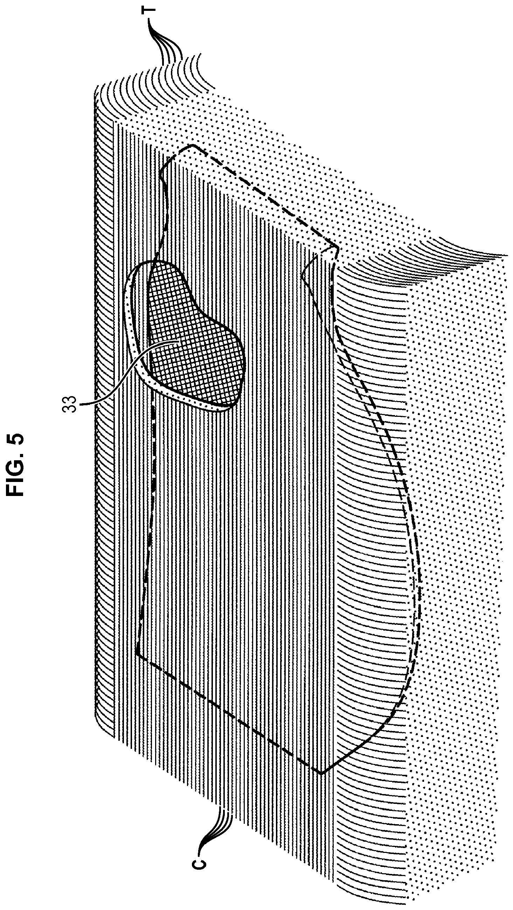

Les figures 5 à 9 illustrent des étapes d'un procédé de fabrication S d'une aube de soufflante 7 conforme à un mode de réalisation possible de l'invention.

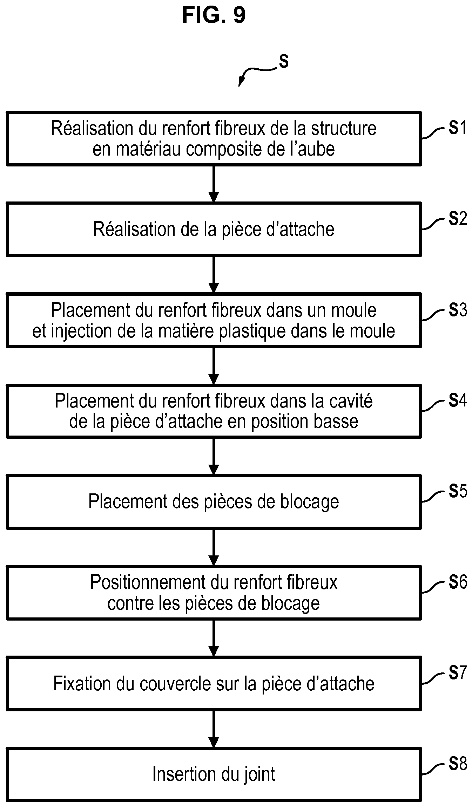

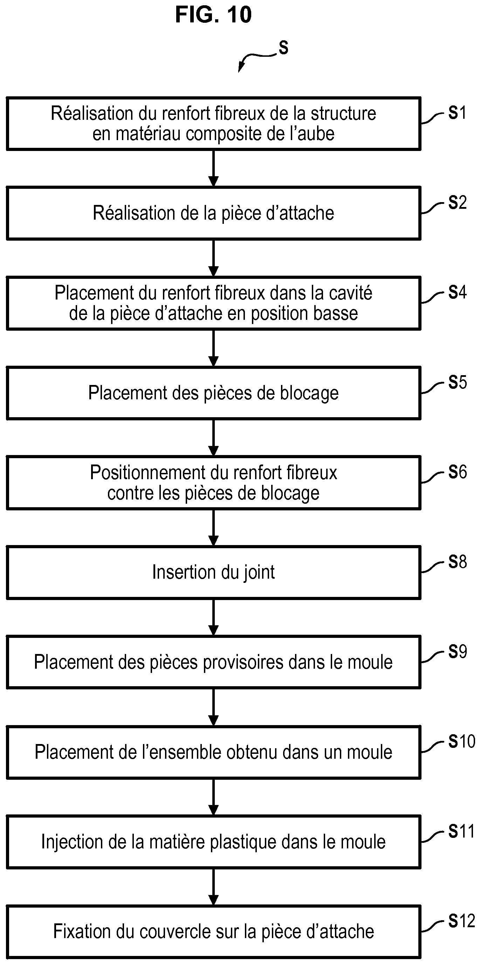

Ce procédé de fabrication comprend notamment la réalisation du renfort fibreux 33 et son injection avec une matière plastique afin d'obtenir l'aube 7 de soufflante. Comme nous le verrons par la suite, l'étape d'injection peut être réalisée avant placement du renfort fibreux 33 dans la pièce d'attache 9 (figure 9) ou, en variante, après son placement (figure 10).

Dans une première forme de réalisation (figure 9), le renfort fibreux 33 est réalisé puis consolidé avec une matrice (matière plastique) préalablement à son placement dans la pièce d'attache 9. Avantageusement, l'aube 7 de soufflante ainsi obtenue est alors démontable, ce qui permet son remplacement sans endommager la pièce d'attache 9 ni déposer tout le disque de soufflante.

Pour cela, selon une étape S1 (figure 5), le renfort fibreux 33 est réalisé par tissage tridimensionnel sur un métier à tisser de type jacquard. Lors du tissage, des faisceaux de fils de chaine C (ou torons de chaine) sont disposés en plusieurs couches de plusieurs centaines de fils chacune. Des fils de trame T (ou torons de trame) sont entrelacés avec les fils de chaine C de manière à lier les différentes couches de fils de chaines C entre elles.

Dans l'exemple illustré, le tissage tridimensionnel est un tissage à armure « interlock ». Par « interlock », on désigne une armure de tissage dans laquelle chaque couche de fils de trame lie plusieurs couches de fils de chaine avec tous les fils d'une même colonne de trame ayant le même mouvement dans le plan de l'armure.

D'autres types de tissages tridimensionnels connus peuvent être utilisés, comme notamment ceux décrits dans le document WO 2006/136755.

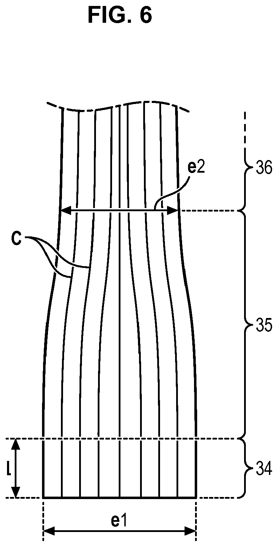

Comme illustré à la figure 6, l'étape de tissage du renfort fibreux 33 brut (ou préforme) comprend successivement le tissage d'une portion de renfort fibreux provisoire 34 (qui sera chutée plus tard au cours du procédé de fabrication), le tissage de la portion de renfort fibreux de pied d'aube 35 destinée à former la partie de pied d'aube 22 puis le tissage d'une portion de renfort fibreux de pale 36 destinée à former le la partie de pale 21.

La portion de renfort fibreux provisoire 34 est tissée en entrelaçant tous les torons de chaine C nécessaires à la réalisation du renfort fibreux 33. Une fois que la colonne de trame a atteint une largeur l prédéterminée, la portion de renfort fibreux de pale 36 est tissée. De cette manière, la portion de renfort de pied d'aube 35 comprend des fils de chaine C qui se prolongent à l'intérieur de la portion de renfort fibreux de pale 36.

Comme cela est visible sur la figure 6, la portion de renfort fibreux de pied d'aube 35 est tissée avec des torons de trame successifs T qui présentent des titrages différents, qui décroissent dans le sens du tissage (sens de tissage indiqué par la flèche), c'est-à-dire des titrages qui décroissent à mesure que l'on se rapproche de la portion de renfort fibreux de pale 36, afin que la portion de renfort fibreux de pied d'aube 35 présente des flancs inclinés. Ces flancs inclinés viendront ensuite en appui contre la face inférieure 19b inclinée des pièces de blocage 19.

On rappelle que le « titrage » désigne une grandeur caractérisant la finesse d'un fil : il est défini comme la masse du fil par unité de longueur. L'unité normalisée pour mesurer le titrage est le Tex (masse en grammes de 1000 mètres de fil) ou le Décitex (masse en grammes de 10 000 mètres de fil). D'autres unités peuvent être également utilisées telles que le denier, le numéro métrique ou encore le numéro anglais.

De cette manière, la portion de renfort fibreux de pied d'aube 35 présente une épaisseur qui décroit en se rapprochant de la portion de renfort fibreux de pale 36. La portion de renfort fibreux de pied d'aube présente une épaisseur e1 en pied d'aube et une épaisseur e2 à la jonction avec la portion de renfort fibreux de pale 36, inférieure à e1.

Au fur et à mesure du tissage du renfort fibreux 33 dont l'épaisseur et la largeur varient, un certain nombre de fils de chaine C ne sont pas tissés, ce qui permet de définir un contour, une largeur et une épaisseur voulus continûment variables, du renfort fibreux 33.

Les fils de chaine C et les fils de trame T situés à la limite de la masse tissé (appelés « flottés ») sont également découpés, de manière à extraire le renfort fibreux 33 (figure 8).

Ensuite, le renfort fibreux fini est obtenu en réalisant un détourage (« contouring ») de la préforme. Le détourage désigne la découpe de la préforme à plat le long du bord d'attaque, du bord de fuite, de la tête (en laissant des sur-longueurs sur ces trois découpes). Un détourage est également réalisé le long de la veine inférieure et sur les faces latérales de la partie de pied d'aube.

En outre, la portion de renfort fibreux provisoire 34 est découpée afin d'être éliminée. Le détourage et la découpe de la portion de pied d'aube peuvent être réalisés au jet d'eau sous pression.

Selon une étape S2, la pièce d'attache 9 est réalisée, par exemple par usinage, afin de former la cavité 28, la première ouverture 29, la deuxième ouverture 30, l'épaulement 10 et le cas échéant un filet au niveau de la deuxième ouverture 30 pour permettre le vissage du couvercle 31.

Selon une étape S3, le renfort fibreux 33 est placé dans un moule présentant une cavité ayant la forme de la pièce finale moulée (à savoir l'aube de soufflante 7) et de la matière plastique (appelée « matrice ») est injectée dans le moule de manière à imprégner tout le renfort fibreux 33. L'injection de matière plastique peut être réalisée par une technique d'injection du type RTM ou VARRTM. La matière plastique injectée est par exemple une composition liquide thermodurcissable contenant un précurseur organique du matériau de la matrice. Le précurseur organique se présente habituellement sous forme d'un polymère, tel qu'une résine, éventuellement dilué dans un solvant.

De manière connue en soi, la matière plastique est chauffée de manière à provoquer une polymérisation de la matière plastique, par exemple par réticulation. A cet effet, le moule est placé dans une étuve. La pièce obtenue est ensuite démoulée puis détourée par usinage du bord d'attaque, du bord de fuite et de la tête de pale afin de supprimer les sur-longueur et d'obtenir une pièce présentant la forme désirée et respecter ainsi les contraintes aérodynamiques, malgré une éventuelle rétractation des fibres du renfort 33 pendant la polymérisation de la matière plastique. La partie inférieure de l'aube est également usinée. Le cas échéant, le détourage peut être réalisé à la fin du procédé S.

Le renfort 33 imprégné de matière plastique constituant la matrice 34 forme la structure en matériau composite 17 de l'aube 7.

Selon une étape S4, la structure en matériau composite 17 est placée dans la pièce d'attache 9 à travers la première ouverture 29 de telle sorte que la partie de pale (qui comprend la portion de renfort fibreux de pale 36) est située à l'extérieur de la pièce d'attache 9, au-delà de la première ouverture 29, et que la partie de pied d'aube 22 (qui comprend la portion de renfort fibreux de pied d'aube 35) est située à l'extérieur de la pièce d'attache 9, au-delà de la deuxième ouverture 30. En d'autres termes, la structure en matériau composite 17, qui comprend le renfort fibreux 33, est insérée par la première ouverture 29 de la pièce d'attache 9 mais est placée dans une position plus basse par rapport à la pièce d'attache 9 que sa position finale de sorte à faire saillie de la deuxième ouverture 30.

A cette étape, la structure en matériau composite 17 n'est pas retenue dans la pièce d'attache 9.

Selon une étape S5, les pièces de blocage 19 sont placées dans la cavité 28 de sorte que leur face supérieure 1a9 vienne en butée axiale contre la face inférieure 10b de l'épaulement 10 et que, le cas échéant, leur languette 19c vienne en butée radiale contre la face radiale 10c de l'épaulement 10. Les pièces de blocage 19 sont alors positionnées angulairement, axialement et radialement dans la pièce d'attache 9.

L'introduction des pièces de blocage 19 est notamment facilitée par l'abaissement de la structure en matériau composite 17 à l'étape S3, qui permet de dégager un espace d'insertion entre la deuxième ouverture 30 et la partie de pied d'aube 22. Cette introduction est encore davantage facilitée lorsque des renfoncements 8 sont formés dans l'épaulement 10, les pièces de blocage 19 étant moins encombrantes radialement.

Selon une étape S6, la structure en matériau composite 17 est remontée dans la pièce d'attache 9 en direction de la première ouverture 29 jusqu'à venir en appui contre la face inférieure 19b inclinée des pièces de blocage 19.

Le cas échéant, une ou des cales sont également insérées dans la cavité 28 de sorte à former une butée radiale pour la portion du renfort de pied d'aube s'étendant dans le prolongement du bord d'attaque et/ou le bord de fuite de la structure en matériau composite 17.

Optionnellement, les vides restant dans la cavité 28 de la pièce d'attache 9, notamment entre la première ouverture 29 et l'épaulement 10 et/ou entre les pièces de blocage 19 et le couvercle 31, peuvent être comblés avec de la mousse 40. La mousse 40 permet ainsi de protéger l'aube 7 contre l'introduction de poussières, d'eau, de glace, etc. et, le cas échéant, de maintenir l'aube 7 en position dans la pièce d'attache 9. Pour cela, la mousse 40 est choisie de sorte à présenter une raideur de l'ordre de quelques GPa. Par exemple, la mousse peut comprendre du polymethacrylimide (PMI).

Selon une étape S7, le couvercle 31 est fixé sur la pièce d'attache au niveau de la deuxième ouverture en comprimant la partie de pied d'aube 22 entre le couvercle 31 et les pièces de blocage 19. En particulier, le couvercle 31 est fixé de telle sorte qu'il exerce sur la partie de pied d'aube 22 une force de compression qui contraint la partie de pied d'aube 22 contre les pièces de blocage 19 et les plaque contre l'épaulement 10.

Selon une étape S8, le joint 20 est inséré dans la première ouverture 29. Bien entendu, on comprendra que l'étape S8 peut être réalisée avant l'étape S7.

Dans une deuxième forme de réalisation (figure 10), le renfort fibreux 33 n'est consolidé avec une matrice (matière plastique) qu'après son placement dans la pièce d'attache 9.

Pour cela, le renfort fibreux est tissé et la pièce d'attache 9 est usinée conformément aux étapes S1 et S2 décrites ci-dessus. Puis, le renfort fibreux 33 est placé dans la pièce d'attache 9, les pièces de blocage 19 sont placées contre l'épaulement 10, le renfort fibreux 33 est remonté en appui contre les pièces de blocage 19, de la mousse 40 est optionnellement introduite dans la cavité 28 pour combler les vides et le joint 20 est inséré dans la première ouverture 29, conformément aux étapes S4 à S6 et S8 décrites ci-dessus.

A ce stade, le renfort fibreux 33 n'est donc pas encore consolidé et le couvercle 31 n'est pas fixé sur le deuxième orifice 30. Par ailleurs, le renfort fibreux

Optionnellement, afin de maintenir le renfort fibreux 33 en position dans la pièce d'attache 9 en vue de sa consolidation avec de la matière plastique, des pièces provisoires de maintien en position du renfort fibreux 33 peuvent être positionnées dans la pièce d'attache 9 contre la portion de renfort de pied 35 (étape S9). Par ailleurs, des pièces provisoires de protection peuvent être placées au niveau de la deuxième ouverture 30 pour protéger les moyens de fixation du couvercle 31 et empêcher leur revêtement par la matière plastique.

Puis, selon une étape S10, l'ensemble obtenu comprenant le renfort fibreux 33, la pièce d'attache 9, éventuellement la mousse 40, les pièces de blocage 19, le joint 20 et les éventuelles pièces provisoires, est placé dans un moule présentant une cavité ayant la forme de la pièce finale moulée (à savoir l'aube de soufflante 7).

Selon une étape S11, de la matière plastique est injectée dans le moule de manière à imprégner tout le renfort fibreux 33. L'injection de matière plastique peut être réalisée conformément à l'étape S3 décrite ci-dessus. Le renfort 33 imprégné de matière plastique constituant la matrice 34 forme la structure en matériau composite 17 de l'aube 7.

Selon une étape S12, les pièces provisoires sont retirées et le couvercle 31 est fixé sur la pièce d'attache 9 au niveau de la deuxième ouverture 30 en comprimant la partie de pied d'aube 22 de la structure en matériau composite 17 entre le couvercle 31 et les pièces de blocage 19. En particulier, le couvercle 31 est fixé de telle sorte qu'il exerce sur la partie de pied d'aube 22 une force de compression qui contraint la partie de pied d'aube 22 contre les pièces de blocage 19 et les plaque contre l'épaulement 10.

## Revendications

1. Aube (7) comprenant :
- une structure en matériau composite (17) comprenant un renfort fibreux (33) obtenu par tissage tridimensionnel et une matrice (34) dans laquelle est noyé le renfort fibreux (33), la structure en matériau composite (17) comprenant une partie de pale (21) à profil aérodynamique et une partie de pied d'aube (22) ;
- une pièce d'attache (9) de pied d'aube comprenant une paroi (25) délimitant une cavité (28), une première ouverture (29) formée dans la paroi (25) et une deuxième ouverture (30) située sous la partie de pied d'aube (22), d'un côté opposé de la pièce d'attache (9) par rapport à la première ouverture (28), la structure en matériau composite (17) s'étendant à travers la première ouverture (29) de telle sorte que la partie de pale (21) est située à l'extérieur de la pièce d'attache (9) et la partie de pied d'aube (22) est située à l'intérieur de la cavité (28), la pièce d'attache (9) comprenant en outre un épaulement (10), s'étendant dans la cavité (28) depuis la paroi (25) ;
- deux pièces de blocage (19), chaque pièce de blocage (19) présentant une face supérieure (19a) configurée pour venir en butée axiale contre l'épaulement (10) et une face inférieure (19b) inclinée par rapport à la face supérieure (19a) et configurée pour venir en appui contre la partie de pied d'aube (22) ; et
- un couvercle (31), fixé sur la pièce d'attache (9) au niveau de la deuxième ouverture (30) de sorte que la partie de pied d'aube (22) se trouve comprimée entre le couvercle (31) et les pièces de blocage (19),
l'aube étant **caractérisée en ce qu'**au moins un renfoncement (18) est formé dans l'épaulement (10), chaque pièce de blocage (19) étant logée dans l'au moins un renfoncement (18).

2. Aube selon la revendication 1, dans laquelle les pièces de blocage (19) sont en appui contre le renfoncement (18).

3. Aube selon l'une des revendications 1 ou 2, dans laquelle l'épaulement (10) présente une face radiale (10c) s'étendant en face de la partie de pied d'aube (22) et chaque pièce de blocage (19) comprend une languette (19c) s'étendant depuis sa face supérieure, ladite languette (19c) étant configurée pour venir en butée radiale contre la face radiale (10c) de l'épaulement (10).

4. Aube selon l'une des revendications 1 à 3, dans laquelle le renfort fibreux (33) comprend une portion de renfort fibreux de pale (36) et une portion de renfort fibreux de pied d'aube (35), et dans laquelle la portion de renfort fibreux de pied d'aube (35) est chacune tissée de manière continue avec la portion de renfort fibreux de pale (36).

5. Procédé de fabrication d'une aube (7) selon l'une des revendications 1 à 4 à partir d'un renfort fibreux (33) obtenu par tissage tridimensionnel (S1), le renfort fibreux (33) comprenant une portion de renfort fibreux de pale (36) et une portion de renfort fibreux de pied d'aube (35), le procédé comprenant des étapes de :
- réalisation (S2) de la pièce d'attache de pied d'aube (9) de sorte à former la cavité (28) et l'épaulement (10) ;
- placement (S4) du renfort fibreux (33) dans la pièce d'attache (9) à travers la première ouverture (29) de telle sorte que la portion de renfort fibreux de pale (36) est située à l'extérieur de la pièce d'attache (9), au-delà de la première ouverture (29), et qu'une partie de la portion de renfort fibreux de pied d'aube (35) est située à l'extérieur de la pièce d'attache (9), au-delà de la deuxième ouverture (30) ;
- placement (S5) des pièces de blocage (19) dans la cavité de sorte que leur face supérieure soit en butée axiale contre l'épaulement (10) ;
- placement (S6) du renfort fibreux (33) dans la pièce d'attache (9) de sorte que la portion de renfort fibreux de pied d'aube (35) est située à l'intérieur de la pièce d'attache (9) et soit en appui contre la face inférieure inclinée des pièces de blocage (19) ; et
- fixation (S7, S12) du couvercle (31) sur la pièce d'attache (9) au niveau de la deuxième ouverture (30) en comprimant la partie de pied d'aube (22) entre le couvercle (31) et les pièces de blocage (19).

6. Procédé de fabrication d'une aube (7) selon la revendication 5, comprenant en outre une étape (S3) de placement du renfort fibreux dans un moule et d'injection de matière plastique dans le moule de manière à former la structure en matériau composite (17) comprenant le renfort fibreux (33) et une matrice (34) dans laquelle est noyé le renfort fibreux (33) préalablement à l'étape S3 de placement.

7. Procédé de fabrication selon la revendication 6, comprenant en outre une étape (S10) de placement de l'ensemble formé du renfort fibreux (33), de la pièce d'attache (9) et des pièces de blocage (19) dans un moule et une étape (S11) d'injection de matière plastique dans le moule de manière à former la structure en matériau composite (17) comprenant le renfort fibreux (33) et une matrice (34) dans laquelle est noyé le renfort fibreux (33) préalablement à l'étape S6 de fixation du couvercle (31).

8. Procédé selon la revendication 7, comprenant en outre une étape (S9) de placement de pièces provisoires de protection contre la portion de renfort fibreux de pied (22) et/ou au niveau de la deuxième ouverture (30) préalablement à l'étape (S10) de placement de l'ensemble dans un moule et une étape de retrait desdites pièces provisoires de protection préalablement à l'étape (S12) de fixation du couvercle (31).

9. Moteur à turbine à gaz (1) comprenant une soufflante, la soufflante comprenant un moyeu (6) et des aubes (7) s'étendant radialement à partir du moyeu (6), les aubes (7) étant conformes à l'une des revendications 1 à 4, chaque aube (7) étant montée rotative par rapport au moyeu (6) autour d'un axe de calage (Y) respectif, le moteur (1) comprenant en outre un mécanisme d'actionnement (8) propre à être commandé pour faire tourner les aubes (7) autour de leurs axes de calage (Y) de manière à modifier l'angle de calage des aubes (7).

10. Aéronef comprenant un moteur à turbine à gaz (1) selon la revendication 9.

## Patentansprüche

1. Rotorblatt (7), umfassend:
- eine Verbundstoffstruktur (17), die eine durch dreidimensionales Weben erhaltene Faserverstärkung (33) und eine Matrix (34) umfasst, in die die Faserverstärkung (33) eingebettet ist, wobei die Verbundstoffstruktur (17) einen Rotorblattteil (21) mit aerodynamischem Profil und einen Rotorblattfußteil (22) umfasst;
- ein Rotorblattfußbefestigungsteil (9) mit einer Wand (25), die einen Hohlraum (28) begrenzt, einer ersten Öffnung (29), die in der Wand (25) ausgebildet ist, und einer zweiten Öffnung (30), die sich unterhalb des Rotorblattfußteils (22) auf einer gegenüberliegenden Seite des Befestigungsteils (9) in Bezug auf die erste Öffnung (28) befindet, wobei sich die Verbundstoffstruktur (17) durch die erste Öffnung (29) erstreckt, so dass sich der Rotorblattteil (21) außerhalb des Befestigungsteils (9) befindet und sich der Rotorblattfußteil (22) innerhalb des Hohlraums (28) befindet, wobei das Befestigungsteil (9) ferner eine Schulter (10) umfasst, die sich von der Wand (25) in den Hohlraum (28) erstreckt;
- zwei Klemmstücke (19), wobei jedes Klemmstück (19) eine obere Fläche (19a), die derart ausgelegt ist, dass sie axial an der Schulter (10) anliegt, und eine untere Fläche (19b) aufweist, die in Bezug auf die obere Fläche (19a) geneigt und derart ausgelegt ist, dass sie an dem Rotorblattfußteil (22) anliegt; und
- eine Abdeckung (31), die an dem Befestigungsteil (9) im Bereich der zweiten Öffnung (30) befestigt ist, so dass der Rotorblattfußteil (22) zwischen der Abdeckung (31) und den Klemmstücken (19) zusammengedrückt wird,
wobei das Rotorblatt **dadurch gekennzeichnet ist, dass** mindestens eine Vertiefung (18) in der Schulter (10) ausgebildet ist, wobei jedes Klemmstück (19) in der mindestens einen Vertiefung (18) untergebracht ist.

2. Rotorblatt nach Anspruch 1, wobei die Klemmstücke (19) an der Vertiefung (18) anliegen.

3. Rotorblatt nach einem der Ansprüche 1 oder 2, wobei die Schulter (10) eine radiale Fläche (10c) aufweist, die sich gegenüber dem Rotorblattfußteil (22) erstreckt, und jedes Klemmstück (19) eine Zunge (19c) umfasst, die sich ab seiner oberen Fläche erstreckt, wobei die Zunge (19c) derart ausgelegt ist, dass sie radial an der radialen Fläche (10c) der Schulter (10) anliegt.

4. Rotorblatt nach einem der Ansprüche 1 bis 3, wobei die Faserverstärkung (33) einen Rotorblatt-Faserverstärkungsabschnitt (36) und einen Rotorblattfuß-Faserverstärkungsabschnitt (35) umfasst, und wobei der Rotorblattfuß-Faserverstärkungsabschnitt (35) jeweils kontinuierlich mit dem Rotorblatt-Faserverstärkungsabschnitt (36) verwoben ist.

5. Verfahren zur Herstellung eines Rotorblatts (7) nach einem der Ansprüche 1 bis 4 aus einer durch dreidimensionales Weben (S1) erhaltenen Faserverstärkung (33), wobei die Faserverstärkung (33) einen Rotorblatt-Faserverstärkungsabschnitt (36) und einen Rotorblattfuß-Faserverstärkungsabschnitt (35) umfasst, wobei das Verfahren die folgenden Schritte umfasst:
- Herstellen (S2) des Rotorblattfußbefestigungsteils (9), um den Hohlraum (28) und die Schulter (10) zu bilden;
- Platzieren (S4) der Faserverstärkung (33) in dem Befestigungsteil (9) durch die erste Öffnung (29), so dass sich der Rotorblatt-Faserverstärkungsabschnitt (36) außerhalb des Befestigungsteils (9) jenseits der ersten Öffnung (29) befindet und sich ein Teil des Rotorblattfuß-Faserverstärkungsabschnitts (35) außerhalb des Befestigungsteils (9) jenseits der zweiten Öffnung (30) befindet;
- Platzieren (S5) der Klemmstücke (19) in dem Hohlraum, so dass ihre obere Fläche axial an der Schulter (10) anliegt;
- Platzieren (S6) der Faserverstärkung (33) in dem Befestigungsteil (9), so dass sich der Rotorblattfuß-Faserverstärkungsabschnitt (35) innerhalb des Befestigungsteils (9) befindet und an der schrägen unteren Fläche der Klemmstücke (19) anliegt; und
- Befestigen (S7, S12) der Abdeckung (31) an dem Befestigungsteil (9) im Bereich der zweiten Öffnung (30) durch Zusammendrücken des Rotorblattfußteils (22) zwischen der Abdeckung (31) und den Klemmstücken (19).

6. Verfahren zur Herstellung eines Rotorblatts (7) nach Anspruch 5, ferner umfassend einen Schritt (S3) des Platzierens der Faserverstärkung in einer Form und des Einspritzens von Kunststoff in die Form, um die Verbundstoffstruktur (17) zu bilden, die die Faserverstärkung (33) und eine Matrix (34) umfasst, in der die Faserverstärkung (33) eingebettet ist, vor dem Schritt S3 des Platzierens.

7. Herstellungsverfahren nach Anspruch 6, ferner umfassend einen Schritt (S10) des Anordnens der aus der Faserverstärkung (33), dem Befestigungsteil (9) und den Klemmstücken (19) gebildeten Anordnung in einer Form und einen Schritt (S11) des Einspritzens von Kunststoff in die Form, um die Verbundstoffstruktur (17) zu bilden, die die Faserverstärkung (33) und eine Matrix (34) umfasst, in die die Faserverstärkung (33) eingebettet ist, vor dem Schritt S6 des Befestigens der Abdeckung (31) .

8. Verfahren nach Anspruch 7, ferner umfassend einen Schritt (S9) des Platzierens von provisorischen Schutzteilen an der Faserverstärkung des Fußes (22) und/oder im Bereich der zweiten Öffnung (30) vor dem Schritt (S10) des Platzierens der Anordnung in einer Form und einen Schritt des Entfernens der provisorischen Schutzteile vor dem Schritt (S12) des Befestigens des Deckels (31).

9. Gasturbinentriebwerk (1) mit einem Gebläse, wobei das Gebläse eine Nabe (6) und sich radial von der Nabe (6) aus erstreckende Rotorblätter (7) aufweist, wobei die Rotorblätter (7) nach einem der Ansprüche 1 bis 4 sind, wobei jedes Rotorblatt (7) in Bezug auf die Nabe (6) um eine jeweilige Einstellachse (Y) drehbar angebracht ist, wobei das Triebwerk (1) ferner einen Betätigungsmechanismus (8) umfasst, der imstande ist, derart gesteuert zu werden, dass er die Rotorblätter (7) derart um ihre Einstellachsen (Y) dreht, dass der Einstellwinkel der Rotorblätter (7) geändert wird.

10. Fluggerät, umfassend ein Gasturbinentriebwerk (1) nach Anspruch 9.

## Claims

1. A blade (7) comprising :
- a structure (17) made of composite material comprising a fibrous reinforcement (33) obtained by three-dimensional weaving and a matrix (34) in which the fibrous reinforcement (33) is embedded, the structure made of composite material (17) comprising an aerofoil portion (21) with aerodynamic profile and a blade root portion (22);
- a blade root attachment part (9) comprising a wall (25) delimiting a cavity (28), a first opening (29) formed in the wall (25) and a second opening (30) located under the blade root portion (22), on an opposite side of the attachment part (9) relative to the first opening (28), the structure (17) made of composite material extending through the first opening (29) such that the aerofoil portion (21) is located outside the attachment part (9) and the blade root portion (22) is located inside the cavity (28), the attachment part (9) further comprising a shoulder (10), extending into the cavity (28) from the wall (25);
- two locking parts (19), each locking part (19) having an upper surface (19a) configured to axially abut against the shoulder (10) and a lower surface (19b) inclined relative to the upper surface (19a) and configured to bear against the blade root portion (22); and
- a cover (31), fixed on the attachment part (9) at the second opening (30) such that the blade root portion (22) is compressed between the cover (31) and the locking parts (19),
the blade being **characterized in that** at least one recess (18) is formed in the shoulder (10), each locking part (19) being housed in the at least one recess (18).

2. The blade according to claim 1, wherein the locking parts (19) bear against the recess (18).

3. The blade according to one of claims 1 or 2, wherein the shoulder (10) has a radial surface (10c) extending opposite the blade root portion (22) and each locking part (19) comprises a tab (19c) extending from its upper surface, said tab (19c) being configured to radially abut against the radial surface (10c) of the shoulder (10).

4. The blade according to one of claims 1 to 3, wherein the fibrous reinforcement (33) comprises an aerofoil fibrous reinforcement portion (36) and a blade root fibrous reinforcement portion (35), and wherein each blade root fibrous reinforcement portion (35) is woven continuously with the aerofoil fibrous reinforcement portion (36).

5. A method for manufacturing a blade (7) according to one of claims 1 to 4, from a fibrous reinforcement (33) obtained by three-dimensional weaving (S1), the fibrous reinforcement (33) comprising an aerofoil fibrous reinforcement portion (36) and a blade root fibrous reinforcement portion (35), the method comprising the steps of:
- producing (S2) the blade root attachment part (9) so as to form the cavity (28) and the shoulder (10);
- placing (S4) the fibrous reinforcement (33) in the attachment part (9) through the first opening (29) so that the aerofoil fibrous reinforcement portion (36) is located outside the attachment part (9), beyond the first opening (29), and so that a part of the blade root fibrous reinforcement portion (35) is located outside the attachment part (9), beyond the second opening (30);
- placing (S5) the locking parts (19) in the cavity such that their upper surface axially abuts against the shoulder (10);
- placing (S6) the fibrous reinforcement (33) in the attachment part (9) such that the blade root fibrous reinforcement portion (35) is located inside the attachment part (9) and bears against the inclined lower surface of the locking parts (19); and
- fixing (S7, S12) the cover (31) on the attachment part (9) at the second opening (30) by compressing the blade root portion (22) between the cover (31) and the locking parts (19).

6. The method for manufacturing a blade (7) according to claim 5, further comprising a step (S3) of placing the fibrous reinforcement in a mould and injecting plastic material into the mould so as to form the structure made of composite material (17) comprising the fibrous reinforcement (33) and a matrix (34) in which the fibrous reinforcement (33) is embedded prior to placement step S3.

7. The method of manufacturing according to claim 6, further comprising a step (S10) of placing the assembly formed of the fibrous reinforcement (33), attachment part (9) and locking parts (19) in a mould and a step (S11) of injecting plastic material into the mould so as to form the structure made of composite material (17) comprising the fibrous reinforcement (33) and a matrix (34) in which the fibrous reinforcement (33) is embedded prior to step S6 of fixing the cover (31).

8. The method according to claim 7, further comprising a step (S9) of placing temporary protective pieces against the root fibrous reinforcement portion (22) and/or at the second opening (30) prior to step (S10) of placing the assembly in a mould and a step of withdrawing said temporary protective pieces prior to the step (S12) of fixing the cover (31).

9. A gas turbine engine (1) comprising a fan, the fan comprising a hub (6) and blades (7) extending radially from the hub (6), the blades (7) being according to claims 1 to 4, each blade (7) being mounted to rotate relative to the hub (6) about a respective pitch axis (Y), the engine (1) further comprising an actuating mechanism (8) controllable to rotate the blades (7) about their pitch axes (Y) in such a way as to change the pitch angle of the blades (7).

10. An aircraft comprising a gas turbine engine (1) according to claim 9.
